# EUROPEAN PATENT APPLICATION

(11) **EP 1 411 220 A1**
(43) Date of publication of application: **21.04.2004**
(21) Application number: 03078163.7
(22) Date of filing: 06.10.2003
(51) Int. Cl.: F01P 7/08, F01P 7/04, F16D 25/08, F16D 27/12, F16D 39/00

(54) **Coupling device with a dual control system for motor vehicle fans**

(30) Priority: 14.10.2002 IT MI20022173
(71) Applicant: Baruffaldi S.p.A., 20097 San Donato Milanese, Milan (IT)
(72) Inventor: Boffelli, Piercarlo, Milano (IT)
(74) Representative: Raimondi, Margherita

(57) **Abstract**

Device for transmitting the driving movement to a fan (1) for cooling the coolant in a motor vehicle, comprising movement generating means (3, 21), on which the fan (1) is mounted by means of an idle support (1a), a first electromagnetic clutch (30), engagement of which produces rotation of the fan at the same number of revolutions as that of the movement generating means; a second clutch (60), engagement/disengagement of which produces rotation of the fan at a number of revolutions less than or at zero revolutions relative to that of the movement generating means; means (70) for controlling engagement/disengagement (50) of the second clutch, comprising an actuating element (41) coaxially movable during displacement, in both directions, with respect to the movement generating means (3, 21), but idle upon rotation of the latter, said means (70) for controlling said actuating element (41) comprising a seat (70) which has, arranged inside it, a baffle (71) able to form a stop for said actuating element (41) and movable in an axial direction between at least two different end-of-travel positions (72a, 72b).

## Description

The present invention relates to a device for transmitting the driving movement to a fan for cooling the coolant in a motor vehicle.

It is known in the sector relating to the cooling of coolants contained in the radiators of motor vehicles that there exists the need to force air onto the said radiator in order to obtain more rapid dissipation of heat from the liquid to the exterior, said forced air flow being obtained by causing rotation of a fan, which is normally mounted either directly on the driving shaft or on the shaft of the water pump or on a driven and fixed shaft supporting a pulley which receives the driving movement from a belt actuated by the driving shaft.

It is also known that said fan must be activated only upon reaching of a certain predefined temperature of the water detected by means of a thermostat which actuates an electromagnetic clutch, closing of which causes the fan to start rotating.

Said electromagnetic clutches cause the fan to start rotating at the speed of rotation of the actuating pulley, without the possibility of determining a variation in the speed of rotation of the fan depending on the variation in speed of operation thereof.

In greater detail it is required that a motor vehicle fan must be able to rotate:
- at a speed lower than that of the transmission shaft for cooling in low external temperature conditions;
- at a speed equal to or even greater than that of the transmission shaft in the case of higher external temperatures or use in severe conditions which result in overheating of the engine;
- at zero speed, namely where the fan does not rotate at all and remains in the idle condition relative to the transmission shaft, in the case of particularly low temperature conditions where further cooling is unnecessary or even harmful.

In an attempt to achieve these performance characteristics, coupling systems have been developed, such as those disclosed for example in EP 1,130,233 in the name of the present Applicants, which describes a device for transmitting the driving movement to a fan for cooling the coolant in a motor vehicle, comprising: movement generating means, a first electromagnetic clutch and a second induction clutch, an actuating element coaxially movable during displacement, in both directions, with respect to the movement generating means, but idle upon rotation of the latter, engaging means coaxially integral during rotation with the movement generating means and connected to said displacement actuating element and able to engage/disengage with the rotor of said clutch.

Although performing its intended function, this device does not allow, however, the selection of different slow speeds of rotation of the fan in a discontinuous and reliable manner.

The technical problem which is posed, therefore, is that of providing a device for transmitting the rotational movement to a fan for cooling the coolant in motor vehicles, which is actuated by a single actuating means and allows the fan to be rotated at a number of revolutions which can be controlled and adjusted depending on the actual cooling requirement of the engine, this also including the possibility of keeping the fan inactive at very low external temperatures.

Within the context of this problem a further requirement is that of allowing the discontinuous selection of at least two speed of rotation of the fan lower than that of the movement generating means.

These technical problems are solved according to the present invention by a device for transmitting the driving movement to a fan for cooling the coolant in a motor vehicle, comprising movement generating means, on which the fan is mounted by means of an idle support, a first electromagnetic clutch, engagement of which produces rotation of the fan at the same number of revolutions as that of the movement generating means; a second clutch, engagement/disengagement of which produces rotation of the fan at a number of revolutions less than or at zero revolutions relative to that of the movement generating means; means for controlling engagement/disengagement of the second clutch, comprising an actuating element coaxially movable during displacement, in both directions, with respect to the movement generating means, but idle upon rotation of the latter, said means for controlling said actuating element comprising a seat which has, arranged inside it, a baffle able to form a stop for said actuating element and movable in an axial direction between at least two different end-of-travel positions.

Further details may be obtained from the following description of a non-limiting example of embodiment of the invention, provided with reference to the accompanying drawings in which:
- Fig. 1 shows a schematic axially cross-sectioned view of the device for transmitting the driving movement to the fan according to the present invention with the fan rotating at a first slow speed;
- Fig. 2 shows a schematic axially cross-sectioned view, similar to that of Fig. 1, with the fan rotating at a second reduced slower speed; and
- Fig. 3 shows an axially cross-sectioned view similar to the preceding views with the fan in the idle condition.

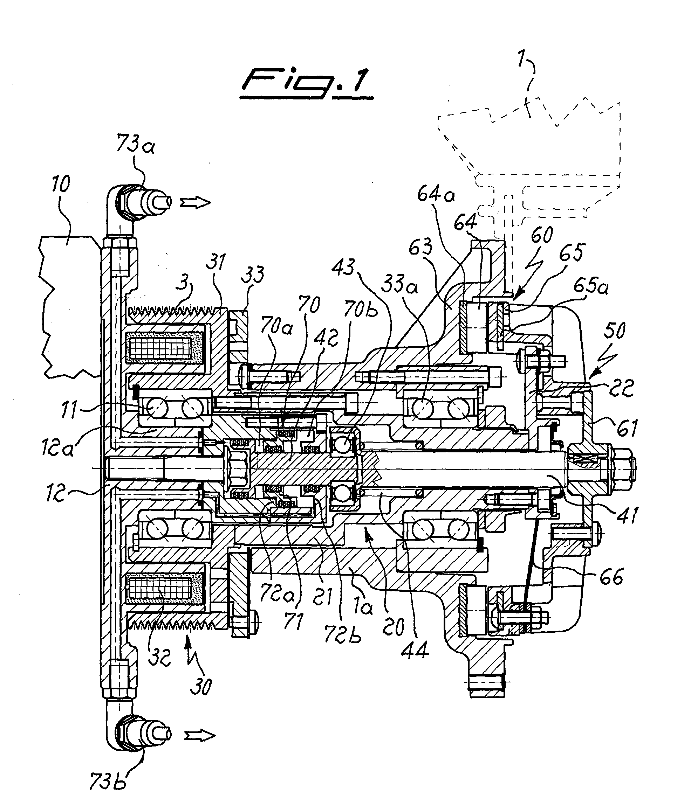

As illustrated in Fig. 1, the device for transmitting the driving movement to a cooling fan 1 for motor vehicles is arranged between the said fan 1 and an actuating shaft 20 integral with a pulley 3 connected to the driving shaft by means of a belt (not shown).

For the sake of convenience of the description below, "longitudinal direction" will be understood as meaning that direction which is parallel to the longitudinal axis of the actuating shaft 20.

In greater detail, the actuating shaft consists of a hollow sleeve 21, one end of which is connected to a rotor 31 integral with the pulley 3 and mounted on a bearing 11 keyed onto a suitable hollow extension 12a of a support flange 12 integral with the base 10 of the engine.

Said rotor 31 forms the rotating element of an electromagnetic clutch 30 formed by an annular electromagnet 32 concentric with the rotor and arranged between the latter and the fixed flange 12 and electrically connected to a thermostat (not shown) for example controlling the temperature of the cooling water.

On the opposite side to the electromagnet 32, relative to the rotor 31, there is arranged the armature 33 of the clutch 30, connected to a bell member 1a which supports the fan 1, said bell member being mounted on a bearing 33a in turn keyed onto the hollow sleeve 21.

The hollow sleeve 21 has, coaxially arranged inside it, the rod 41 of a device 70 for actuating in the longitudinal direction a device 50 for engaging a second clutch 60, the rotor 61 of which is mounted on the free end of the rod 41 and the armature 63 of which is formed by a suitable portion of the bell member 1a supporting the fan 1.

The rotor 61 is also constrained to a resilient membrane 66 which is in turn constrained to a flange 22 integral with the sleeve 21; said membrane offers a high mechanical resistance in the radial direction and a low mechanical resistance in the axial direction, thereby allowing the movement of the rotor 61 in the axial direction and the transmission of a high torque thereto.

Said second clutch 60 is of the induction type, based on parasitic or Foucault currents and comprises a plurality of permanent magnets 64 fixed by a ring 64a of magnetic material and inserted at regular intervals in an annular part 63 of the bell member 1a and a first ring 65 of conductive material which is supported by a second ring 65a of magnetic material mounted on a nonmagnetic support integral with the rotor 61.

In this way the rotor 61 and the magnets 64 form the induction concatenation elements able to cause rotation of the bell member 1a and therefore the fan 1.

The said device for controlling engagement of the second clutch 60 is formed by said rod 41, one end of which is integrally joined to a piston 42 sliding inside a double-acting cylinder 70.

The connection between the rod 41 and the piston 42 is achieved by means of a bearing 43 which ensures that the piston 42 remains rotationally idle with respect to the rod 41.

In greater detail the cylinder 70 is divided into two chambers, 70a and 70b, respectively, which are separated in the axial direction by a baffle 71 which is movable axially between a first end-of-travel stop 72a and a second end-of-travel stop 72b.

The two chambers 70a and 70b are charged with and emptied of the respective operating fluid supplied by means of respective ducts 73a and 73b, so as to determine different speeds of advancing movement of the rod (41) in the longitudinal direction and outwards against the thrusting action of a spring 44 which is arranged between the sleeve 21 and a projection of the said rod 41, which spring tends to cause the return movement of the latter into the retracted position.

Said cylinder may conveniently be of the pneumatic, hydraulic or oil-hydraulic type.

Alternatively, the control means may also be of the electromechanical type.

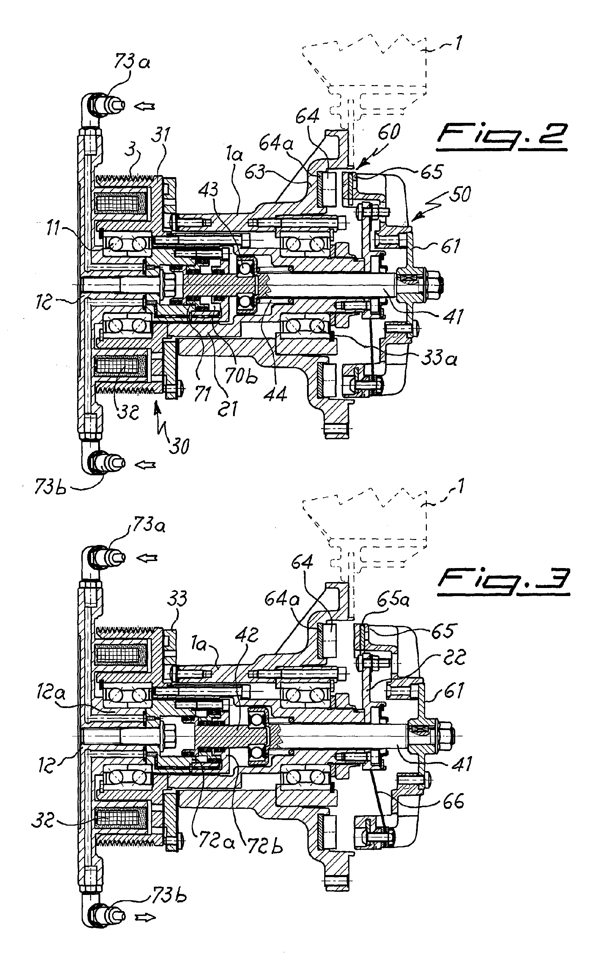

The operating principle of the coupling system is as follows:
a) keeping the chamber 70b discharged and the chamber 70a of the cylinder 70 charged so as to overcome the resistance of the spring 44 (Fig. 3), the piston 42 and therefore the rod 41 is brought into an advanced position, causing the rotor 61 and therefore the ring 65 to be moved away from the magnets 64; in this way the rotor 61 remains inactive, relative concatenation not being possible owing to the large air gap which is present between the magnetically active parts; in this condition two further operating situations may occur:
   a1) keeping the electromagnet 32 deactivated (Fig. 3), the armature 33 of the clutch remains separated from the rotor 31 and the fan (1) remains inactive in the idle condition with respect to the movement generating sleeve 21;
   a2) activating the electromagnet 32, the armature 33 of the first clutch 30 is recalled into contact with the rotor 31, together with which it starts to rotate, causing rotation of the bell member 1a and therefore the fan 1, at the same number of revolutions as that of the actuating shaft;
b) by charging both chambers 70a and 70b of the cylinder 70 (Fig. 2), the baffle 71 is displaced against the first stop 72a, further upstream with respect to the fan, and the piston 42 is displaced downstream until it stops against the said baffle 71 which thus forms a mechanical stop for the said piston; in this condition an air gap is produced between the magnets 64 and the ring 65 so that a relative concatenation of limited intensity occurs; this means that the bell member 1a, and therefore the fan 1, will be driven rotationally by the rotor 61 at a lower speed owing to the high relative slippage due to the limited degree of concatenation;
c) if both the chambers 70a and 70b of the cylinder 70 are kept discharged (Fig. 1), the action of the spring 44 prevails and the rod 41 is brought into the totally retracted position with consequent movement of the rotor 61 and the ring 65 towards the magnets 64; in this condition the intensity of the relative concatenation is very much greater and consequently the relative slippage between bell member 1a and rotor 61 is very much less; a second slow speed (less than that of the sleeve 21) is therefore be produced, said speed having, however, a modulus greater than that determined by the further removed position of the rotor with respect to the bell member 1a described above.

It can therefore be seen how the transmission device according to the invention is able to produce the three required speeds of rotation of the fan (number of revolutions the same as, less than or equal to zero relative to that of the movement generating shaft) without high projecting rotational loads on the fixed support and with control determined by direct sensing of the water temperature.

In addition to this, owing to the longitudinal movement of the rod 41 between the two mechanically determined end-of-travel locating stops, it is possible to achieve two different slow speeds which, as a result of the mechanical action determined by the baffle 71 and by the stops 72a, 72b, may be easily maintained whilst guaranteeing correct operation.

The fact that engagement of the second clutch is determined by the thrusting action of the spring 44 ensures that the rotation of the fan, and therefore cooling of the engine, is guaranteed also in the case where malfunctions prevent correct actuation of the first and second clutches by the various control circuits.

## Claims

1. Device for transmitting the driving movement to a fan (1) for cooling the coolant in a motor vehicle, comprising:
- movement generating means (3, 21), on which the fan (1) is mounted by means of an idle support (1a);
- a first electromagnetic clutch (30), engagement of which produces rotation of the fan at the same number of revolutions as that of the movement generating means;
- a second clutch (60), engagement/disengagement of which produces rotation of the fan at a number of revolutions less than or at zero revolutions relative to that of the movement generating means;
- means (70) for controlling engagement/disengagement (50) of the second clutch, comprising an actuating element (41) coaxially movable during displacement, in both directions, with respect to the movement generating means (3, 21), but idle upon rotation of the latter;
**characterized in that** said means (70) for controlling said actuating element (41) comprise a seat (70) which has, arranged inside it, a baffle (71) able to form a stop for said actuating element (41) and movable in an axial direction between at least two different end-of-travel positions (72a, 72b).

2. Device according to Claim 1, **characterized in that** said element (41) for actuating engagement/disengagement of the second clutch consists of a rod (41) arranged coaxially inside the movement generating means (3,21).

3. Device according to Claim 1, **characterized in that** said means (70) for controlling the actuating element (41) consist of a double-acting cylinder (70).

4. Device according to Claim 3, **characterized in that** said rod (41) is integral during displacement with the piston (42) of the said control cylinder (70), but is rotationally idle with respect thereto.

5. Device according to Claim 3, **characterized in that** said baffle (71) divides the cylinder (70) into two separate chambers (72a,72b) in the axial direction.

6. Device according to Claim 5, **characterized in that** said chambers (72a,72b) are charged/discharged by means of respective ducts (73a,74b) supplying the actuating fluid.

7. Device according to Claim 1, **characterized in that** said end-of-travel positions (72a,7b) of the baffle (71) consist of fixed mechanical stop elements.

8. Device according to Claim 1, **characterized in that** the rotor (61) of said second clutch is integral with the end of the actuating element (41) opposite to that constrained to the control means (70).

9. Device according to Claim 1, **characterized in that** said control means (70) operate the actuating element (41) against the thrusting action of resilient return means (44).

10. Device according to Claim 9, **characterized in that** said resilient return means (44) consist of a spring (44) .

11. Device according to Claim 10, **characterized in that** said spring (44) is coaxially arranged on the actuating element (41) and coaxially positioned between the latter and the shaft (21) for transmission of the movement to the second clutch (60).

12. Device according to Claim 3, **characterized in that** said cylinder is of the pneumatic, hydraulic or oil-hydraulic type.

13. Device according to Claim 1, **characterized in that** displacement control means are of the electromechanical or electromagnetic type.

14. Device according to Claim 1, **characterized in that** said second clutch (60) is of the parasitic current type.

15. Device according to Claim 1, **characterized in that** said second clutch is of the magnetic hysteresis type.

16. Device according to Claim 1, **characterized in that** said first clutch (30) is supported in a position which is substantially adjacent to the engine casing.

17. Device according to Claim 1, **characterized in that** said first clutch (30) comprises an electromagnet (32) coaxially mounted inside the rotor (31) integral with a pulley (3) generating the driving movement.
